# EUROPÄISCHE PATENTANMELDUNG

(11) **EP 0 868 937 A2**
(43) Veröffentlichungstag der Anmeldung: **07.10.1998**
(21) Anmeldenummer: 98104353.2
(22) Anmeldetag: 11.03.1998
(51) Int. Cl.: B01D 53/18, B01D 53/78

(54) **Absorber**

(30) Priorität: 03.04.1997 DE 19713773
(71) Anmelder: DEUTSCHE BABCOCK ANLAGEN GMBH, 46049 Oberhausen (DE)
(72) Erfinder: Dohmann, Joachim, Dr., 46149 Oberhausen (DE); Keldenich, Kai, Dr., 45134 Essen (DE)
(74) Vertreter: Radünz, Ingo, Dipl.-Ing.

(57) **Zusammenfassung**

Ein Absorber stehender Bauart zum Reinigen von Rauchgas mit Hilfe einer Absorberflüssigkeit enthält einen Mantel (1), der im unteren Teil mit einem Gaseintritt (2) und im oberen Teil mit einem Gasaustritt (5) versehen ist. Zwischen dem Gaseintritt (2) und dem Gasaustritt (5) begrenzt der Mantel (1) eine Waschzone (6), der über Düsen (8) die Absorberflüssigkeit zugeführt wird. Der die Waschzone (6) begrenzende Teil des Mantels (1) weist eine nach innen gewölbte, sich stetig ändernde Kontur auf, die sich in Strömungsrichtung des Rauchgases zunächst auf einen engsten Querschnitt verengt und anschließend wieder erweitert.

## Beschreibung

Die Erfindung betrifft einen Absorber mit den Merkmalen des Oberbegriffes des Anspruches 1.

Derartige Sprühabsorber dienen der Entfernung von Schadstoffen, wie SO₂, HCl, HF oder Staub aus Rauchgasen. Sie weisen einen zylindrischen Mantel auf und werden von unten nach oben durchströmt. Die Absorberflüssigkeit, bestehend aus einer ein Neutralisationsmittel enthaltenden wäßrigen Suspension, wird über ein Düsensytem eingespeist.

Die durch die Düsen erzeugten Tropfen fallen infolge der Schwerkrafteinwirkung entgegen der Strömungsrichtung des Rauchgases in Richtung des Absorberbodens, der als Absorbersumpf ausgeführt ist. Der Absorber wird damit zweiphasig im Gegenstrom durchströmt, und zwar von dem Rauchgas als kontinuierliche Phase und von der Absorberflüssigkeit als disperse Phase. Die Intensität des Stoffübergangs zwischen den Phasen innerhalb des Absorbers wird durch mehrere Faktoren beeinflußt, insbesondere
- durch die Konzentrationsdifferenz der abzuscheidenden Gaskomponente zwischen der kontinuierlichen Phase und oberhalb der Grenzflächen der dispersen Phase,
- durch die Stoffübergangskoeffizienten, die von den stofflichen Eigenschaften der kontinuierlichen und der dispersen Phase, sowie von den lokalen Strömungsbedingungen in der dispersen Phase, vornehmlich von der Relativgeschwindigkeit der Tropfen zu dem umgebenden Gas beeinflußt werden,
- durch die Tropfengrößenverteilung der dispersen Phase,
- und durch den Volumenanteil der dispersen Phase.

Der Stoffübergang kann intensiviert werden, wenn die Strömungsgeschwindigkeit der kontinuierlichen Phase im Absorber der freien Fallgeschwindigkeit der dispersen Phase angenähert wird. Dabei werden die Tropfen durch das ihnen entgegen strömende Rauchgas in ihrer freien Bewegung gehindert. Es kommt zu einem Aufstauen der Tropfen, wodurch sich der lokale Volumenanteil der dispersen Phase erhöht.

In der Vergangenheit wurden die Gasgeschwindigkeiten in den Absorbern von weniger als 2 m/s auf 3,5 m/s erhöht. Eine weitere Erhöhung der Gasgeschwindigkeit zur Verbesserung des Stoffüberganges ist durch die physikalischen Randbedingungen begrenzt. So muß sichergestellt werden, daß die Tropfen in allen Betriebszuständen, insbesondere bei Überlast nicht über den Gasaustritt des Absorbers ausgetragen werden. Diese Begrenzung resultiert aus den Funktions-Charakterisitika der verwendeten Tropfenabscheidersysteme, die nur bis zu einer oberen Grenzgeschwindigkeit wirksam arbeiten.

Der Erfindung liegt die Aufgabe zugrunde, den gattungsgemäßen Absorber derart zu gestalten, daß der Stoffübergang zwischen der Absorberflüssigkeit und dem zu reinigenden Rauchgas verbessert wird.

Diese Aufgabe wird bei einem gattungsgemäßen Absorber erfindungsgemäß durch die kennzeichnenden Merkmale des Anspruches 1 gelöst. Vorteilhafte Ausgestaltungen der Erfindung sind Gegenstand der Unteransprüche.

Die Erfindung geht von der Erkenntnis aus, daß die disperse Zweiphasenströmungen im Bereich der Waschzone des Absorbers bei großen Gasgeschwindigkeiten bzw. großen Volumenanteilen der dispersen Phase ein instationäres und räumlich heterogenes Verhalten aufweisen. Das Auftreten instationärer Vorgänge bei hohen Gasgeschwindigkeiten läßt sich anschaulich interpretieren als ein Betriebspunkt beim Übergang des Strömungszustandes der stationären Beregnung der Waschzone, welcher bei niedrigen Gasgeschwindigkeiten vorliegt, zu dem Strömungszustand der stationären Wirbelschicht, welcher bei höheren Gasgeschwindigkeiten zu beobachten ist.

Der Strömungszustand im Übergangsbereich ist anschaulich durch einen periodischen Wechsel zwischen beiden Formen geprägt. Phänomenologisch lassen sich die Effekte als Wellenausbreitungsvorgänge deuten und beschreiben. Räumliche Bereiche mit relativ höherem Volumenanteil der dispersen Phase durchwandern die Waschzone in Richtung der Gasströmung und stellen damit eine wandernde Dichtewelle dar. Als Ursache für das Auftreten instationärer Vorgänge kann der empirisch gesicherte degressive Einfluß der räumlichen Tropfenkonzentration auf die Fallgeschwindigkeit der dispersen Phase angesehen werden. Da es sich bei den beobachtbaren Vorgängen um ein Phänomen des Übergangs einer Strömungsform in eine andere Strömungsform handelt, lassen sich Strömungen im entsprechenden Bereich der relevanten Parameter als transiente Strömungen bezeichnen. Ein wesentliches Merkmal dieser transienten Strömungsform basiert auf dem Auftreten der Dichtewellen. In Gebieten mit lokal erhöhtem Anteil der dispersen Phase ist der freie Abstand benachbarter Tropfen gegenüber weniger dichten Bereichen reduziert, was einer lokalen Zunahme der spezifischen Stoffaustauschfläche entspricht. Ferner können sich Tropfen in diesen Bereichen mit erhöhter Wahrscheinlichkeit berühren, wobei die Phasengrenzflächen deformiert werden, die Tropfen ineinander fließen oder sich zerteilen.

In dem engsten Querschnitt der Waschzone des erfindungsgemäßen Absorbers treten nun in jedem Lastzustand sowohl angehobene Gasgeschwindigkeiten als auch eine erhöhte Beregnungsdichte auf, worunter der Durchsatz der Absorberflüssigkeit je Querschnittsflächen- und Zeiteinheit verstanden wird. Das fördert die lokale Erreichung des gewünschten transienten Strömungszustandes, der den Stoffübergang verbessert. Bei höheren Gasdurchsätzen treten diese transienten Strömungszustände sowohl innerhalb als auch oberhalb des engsten Querschnittes auf. In dem sich erweiternden Teil des Absorbers wird anschließend die Gasgeschwindigkeit auf einen solchen Wert abgebaut, daß in den Tropfenabscheidern alle Tropfen aus dem gereinigten Rauchgas einwandfrei abgetrennt werden können.

Durch die Erhöhung des Stoffüberganges aufgrund des bewußt herbeigeführten transienten Strömungszustandes wird entweder eine Verbesserung der Abscheideleistung des Absorbers oder bei vorgegebener Abscheideleistung eine Reduzierung der erforderlichen Umwälzmenge der Absorberflüssigkeit erreicht. Der letztere Fall bewirkt eine Einsparung der für die Förderung der Absorberflüssigkeit aufzubringenden Energie, was eine deutliche Senkung der Betriebskosten bedeutet.

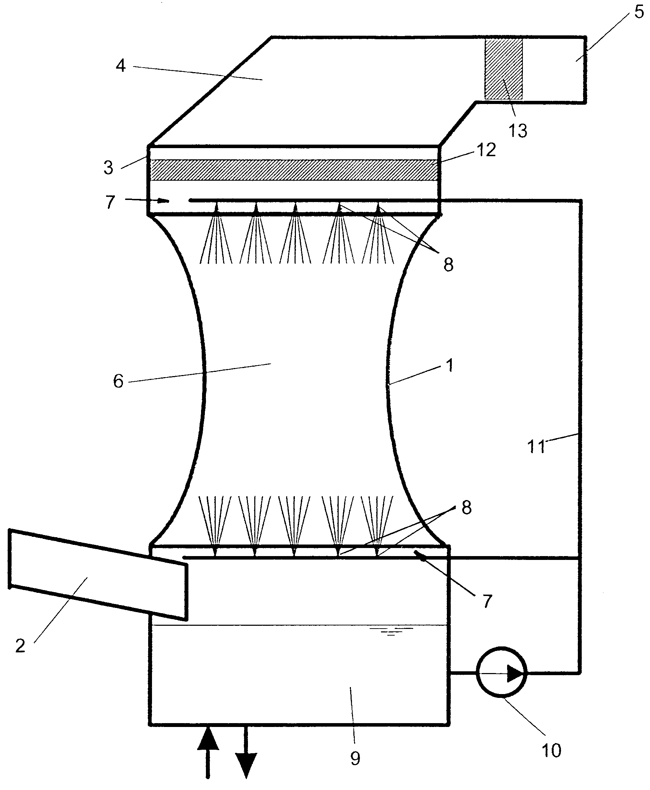

Ein Ausführungsbeispiel der Erfindung ist in der Zeichnung dargestellt und wird im folgenden näher erläutert. Die Zeichnung zeigt schematisch den Längsschnitt durch einen Absorber.

Der als Sprühturm ausgebildete Absorber dient zur Abscheidung von Schadstoffen, wie SO₂, HCl, HF oder Staub aus Rauchgas. Er besteht aus einem äußeren Mantel 1, in dessen unteren Teil ein Gaseintritt 2 mündet und an dessen oberen Teil sich über einen Absorberkopf 3 und eine Haube 4 ein Gasaustritt 5 anschließt. Zwischen dem Gaseintritt 2 und dem Gasaustritt 5 befindet sich eine Waschzone 6, der über Verdüsungsebenen 7 eine Absorberflüssigkeit zugeführt wird. In den Verdüsungsebenen 7 befinden sich Düsen 8, deren Aufgabe die Erzeugung von Tropfen ist. Die eingesprühte Absorberflüssigkeit sammelt sich nach dem Durchgang durch die Waschzone 6 in einem Absorbersumpf 9, der in dem unteren Teil des Absorbers unterhalb des Gaseintrittes 2 vorgesehen ist. Aus dem Absorbersumpf 9 wird die Absorberflüssigkeit mit Hilfe einer Umwälzpumpe 10 entnommen und über eine oder mehrere Förderleitungen 11 zu den Düsen 8 in den Verdüsungsebenen 7 gefördert. Ein Teil der Absorberflüssigkeit wird aus dem Absorbersumpf 9 abgezogen und durch frische Absorberflüssigkeit ersetzt.

Oberhalb der oberen Verdüsungsebene 7 ist in dem Absorberkopf 3 ein erster Tropfenabscheider 12, der als Grobabscheider dient, und in dem Gasaustritt 5 ein zweiter Tropfenabscheider 13, der als Feinabscheider dient, angeordnet. Die nur schematisch dargestellten Tropfenabscheider 12, 13 bestehen aus handelsüblichen Lamellenabscheidern.

Das zu reinigende Rauchgas tritt durch den Gaseintritt 2 in den unteren Teil des Absorbers ein. Innerhalb des Absorbers wird das Rauchgas in die vertikale Richtung nach oben umgelenkt und tritt durch die Waschzone 6 hindurch. In der Waschzone 6 treten das Rauchgas und die Absorberflüssigkeit in intensiven Kontakt, wodurch ein Stoffübergang ermöglicht wird. Die Absorberflüssigkeit besteht aus einer wäßrigen Suspension, die zum einen ein Neutralisationsmittel, z. B. Kalk oder Kalkhydrat, und zum anderen gelöste oder aus der Lösung kristallisierte Reaktionsprodukte wie z. B. CaCl₂, CaF₂, CaSO₃ oder CaSO₄ enthält. Ferner können der Absorberflüssigkeit noch Additive, wie z. B. Carbon- oder Dicarbonsäuren, die den pH-Wert der Absorberflüssigkeit puffern, oder Antischaummittel zugeführt werden.

Der die Waschzone 6 begrenzende Teil des Mantels 1 verjüngt sich in Strömungsrichtung des Rauchgases zunächst auf einen engsten Querschnitt und erweitert sich anschließend wieder. Bei dem dargestellten Absorber befindet sich der engste Querschnitt in der halben Höhe der Waschzone 6. Die Verjüngung und die Erweiterung zeigen vorzugsweise einen stetigen Verlauf. Der unterhalb des engsten Querschnittes liegende Teil der Waschzone 6 kann eine geringere Höhe aufweisen als der Teil oberhalb des engsten Querschnittes. Im Extremfall kann der untere Teil ganz entfallen, so daß die Waschzone 6 mit dem engsten Querschnitt beginnt und lediglich sich anschließend erweitert.

Der Mantel 1 weist vorzugsweise einen kreisrunden Querschnitt auf. Daneben ist auch eine rechteckige oder eine sonstige Querschnittsform möglich. Der die Waschzone 6 begrenzende Teil des Mantels 1 kann beispielsweise aus zwei Pyramiden- oder Kegelstümpfen bestehen, die direkt oder über einen Zwischenabschnitt, der mit senkrechten Wänden versehen sein kann, aneinander stoßen. Der Mantel 1 kann auch mit einer nach innen gewölbten Kontur versehen sein. Diese Kontur kann der mathematischen Form einer Hyperbel folgen. Weist der Mantel 1 einen kreisrunden Querschnitt auf, so zeigt die Kontur des Mantels 1 die Form eines einschaligen Rotationshyperboloids. Diese Form ist in der Zeichnung dargestellt.

Bei der Festlegung der Form der Mantelfläche ist das Verhältnis der Geschwindigkeiten der Gasphase im Austritt der Waschzone 6 (w_{T}) zu derjenigen im engsten Querschnitt der Waschzone 6 (w_{E}) bzw. das Verhältnis der entsprechenden Querschnittflächen (F_{T}, F_{E}) von Bedeutung. Der günstigste Wert für das Verhältnis w_{T} : w_{E} = F_{E} : F_{T} erstreckt sich über den Wertebereich von 0,4 bis 0,99, vorzugsweise von 0,6 bis 0,75.

Die Ausformung der Wand des die Waschzone 6 begrenzenden Mantels 1 in Form eines einschaligen Rotationshyperboloids ermöglicht den Einsatz flexibler Materialien, z. B. von mit Glasfasern verstärkten Kunststoffen oder anderer Verbundwerkstoffe. Rotationshyperboloide besitzen an jedem Punkt der Fläche genau zwei Tangenten, sogenannte Erzeugende, wobei jeder Punkt dieser Erzeugenden ein Punkt der Fläche ist. Diese beiden Erzeugenden sind also vollständig in der Mantelfläche eingebettet. Insbesondere können entlang der Erzeugenden Bauelemente vorteilhaft verwendet werden, die zur Aufnahme von Zugspannungen geeignet sind. Dazu können metallische oder nichtmetallische Spanndrähte eingesetzt werden, oder aber anisotrope Materialien, deren Textur in Richtung dieser Erzeugenden weist, z. B. Fasern aus Glas, Carbiden, Aramid, Nylon, oder anderen zugbeständigen, kriechfesten Werkstoffen in faserverstärkten Verbundmaterialien.

Bei der Verwendung dünner Materialien kann es vorteilhaft sein, das Material nicht durch Öffnungen zu schwächen, um die Zuleitungen zu den Düsen 8 durch die Mantelfläche hindurchzuführen. Derartige Öffnungen können vermieden werden, wenn die Düsen 8, wie dargestellt, oberhalb und/oder unterhalb der von dem Rotationshyperboloid umschlossenen Waschzone 6 angeordnet sind.

Die Fläche des Mantels 1 kann auch aus kleineren ebenen Elementen zusammengesetzt werden (Triangulierung des Mantels). Abweichungen von der Form können auch dadurch erzielt werden, indem der Mantel 1 abschnittsweise aus Hyperboloidschalen zusammengesetzt wird. Dadurch können die mechanischen Eigenschaften erhalten bleiben. Gleichzeitig können aber geringe Abweichungen von der mathematisch exakten Form des Rotationshyperboloids zugelassen werden.

## Patentansprüche

1. Absorber zum Reinigen von Rauchgas mit Hilfe einer Absorberflüssigkeit, wobei der stehende Absorber einen Mantel (1) enthält, der im unteren Teil mit einem Gaseintritt (2) und im oberen Teil mit einem Gasaustritt (5) versehen ist und der zwischen dem Gaseintritt (2) und dem Gasaustritt (5) eine Waschzone (6) begrenzt, der über Düsen (8) die Absorberflüssigkeit zugeführt wird, dadurch gekennzeichnet, daß der die Waschzone (6) begrenzende Teil des Mantels (1) ausgehend von einem engsten Querschnitt sich in Strömungsrichtung des Rauchgases erweitert.

2. Absorber nach Anspruch 1, dadurch gekennzeichnet, daß der die Waschzone (6) begrenzende Teil des Mantels (1) in Strömungsrichtung des Rauchgases sich zunächst auf den engsten Querschnitt kontinuierlich verengt.

3. Absorber nach Anspruch 1 und 2, dadurch gekennzeichnet, daß der die Waschzone (6) begrenzende Teil des Mantels (1) eine nach innen gewölbte, sich stetig ändernde Kontur aufweist.

4. Absorber nach einem der Ansprüche 1 bis 3, dadurch gekennzeichnet, daß der die Waschzone (6) begrenzende Teil des Mantels (1) in vertikaler Erstreckung die Form einer Hyperbel aufweist.

5. Absorber nach einem der Ansprüche 1 bis 4, dadurch gekennzeichnet, daß der die Waschzone (6) begrenzende Teil des Mantels (1) die Form eines einschaligen Rotationshyperboloids aufweist.

6. Absorber nach einem der Ansprüche 1 bis 5, dadurch gekennzeichnet, daß das Verhältnis der Querschnittsfläche in dem engsten Querschnitt der Waschzone (6) und zu der Querschnittsfläche der Waschzone (6) auf der Abströmseite des Rauchgases 0,4 bis 0,99, vorzugsweise 0,6 bis 0,75 beträgt.

7. Absorber nach einem der Ansprüche 1 bis 6, dadurch gekennzeichnet, daß die Düsen (8) oberhalb und/oder unterhalb der Waschzone (6) angeordnet sind.

8. Absorber nach einem der Ansprüche 1 bis 7, dadurch gekennzeichnet, daß die Höhe des die Waschzone (6) begrenzende Teil des Mantels (1) unterhalb des engsten Querschnittes geringer ist als oberhalb des engsten Querschnittes.

9. Absorber nach Anspruch 1 und 5, dadurch gekennzeichnet, daß der Mantel (1) aus Bauelementen zusammengesetzt ist, die Zugspannungen entlang der Erzeugenden des Rotationshyperboloids aufnehmen.

10. Absorber nach Anspruch 1 und 5, dadurch gekennzeichnet, daß der Mantel (1) aus faserverstärkten Verbundmaterialien besteht, deren Textur in Richtung der Erzeugenden des Rotationshyperboloids weist.

11. Absorber nach Anspruch 1 und 5, dadurch gekennzeichnet, daß der Mantel (1) aus kleineren ebenen Flächen aufgebaut ist, die so zusammengefügt sind, daß sie annähernd der Form eines Rotationshyperboloids folgen.
